# EUROPÄISCHE PATENTANMELDUNG

(11) **EP 2 037 360 A2**
(43) Veröffentlichungstag der Anmeldung: **18.03.2009**
(21) Anmeldenummer: 08105085.8
(22) Anmeldetag: 20.08.2008
(51) Int. Cl.: G06F 9/445

(54) **Steuergerät für einen Massenspeicher und Verfahren zum Bereitstellen von Daten für einen Startvorgang eines Computers**

(30) Priorität: 17.09.2007 DE 102007044199
(71) Anmelder: Fujitsu Siemens Computers GmbH, 80807 München (DE)
(72) Erfinder: Depta, Robert, 86179, Augsburg (DE)
(74) Vertreter: Epping - Hermann - Fischer

(57) **Zusammenfassung**

Das Verfahren zum Bereitstellen von Daten für einen Startvorgang eines Computers durch ein Steuergerät (3) für einen Massenspeicher (7) werden die folgenden Schritte ausgeführt: Zunächst werden Daten, die bei einem ersten Startvorgang (Booten) des Computers von dem Massenspeicher gelesen und durch das Steuergerät (3) identifiziert. Bei einem nachfolgenden Herunterfahren (Shut down) des Computers wird mindestens ein Teil der identifizierten Daten durch das Steuergerät (3) von dem Massenspeicher (7) in einen nichtflüchtigen Zwischenspeicher (5) des Steuergeräts kopiert. Bei einem anschließenden weiteren Startvorgang des Computers wird mindestens ein Teil der bei diesem Startvorgang des Computers gelesenen Daten aus dem nichtflüchtigen Zwischenspeicher (5) bereitgestellt.

## Beschreibung

Die Erfindung betrifft ein Verfahren zum Bereitstellen von Daten für einen Startvorgang eines Computers durch ein Steuergerät für einen Massenspeicher sowie ein zur Durchführung des Verfahrens geeignetes Steuergerät für einen Massenspeicher.

Bei dem Startvorgang eines Computers nach dem Einschalten des Computers (Kaltstart) oder nach einem Zurücksetzen (Reset) des Computers (Warmstart) wird üblicherweise zunächst eine in einem nichtflüchtigen Speicher, zum Beispiel einem EEPROM (Electrically Erasable Programmable Read Only Memory) oder einem Flash-Speicher, gespeicherte Startroutine eines BIOS (Basic Input Output System) des Computers abgearbeitet. Diese Startroutine initialisiert zunächst das Laden weiterer Teile des BIOS aus dem nichtflüchtigen Speicher sowie eventuell vorgesehener Ergänzungen des BIOS und Gerätetreiber von einem Massenspeicher, zum Beispiel einem magnetischen Festplattenlaufwerk. Anschließend werden Teile eines Betriebssystems, das im Folgenden auf dem Rechner ausgeführt werden soll, ebenfalls von dem Massenspeicher geladen. Dieser Startvorgang, auch Booten oder Hochfahren des Computers genannt, kann durchaus einige zehn Sekunden bis zu Minuten in Anspruch nehmen.

Eine Methode zur Beschleunigung des Startvorgangs ist vom Betriebssystem VISTA der Firma Microsoft in Verbindung mit dem Einsatz so genannter Hybrid-Festplattenlaufwerke bekannt.

Solche Hybrid-Festplattenlaufwerke weisen neben einem magnetischen Festplattenspeicher noch einen nichtflüchtigen Flash-Speicher auf. Nach dem Bereitstellen der Stromversorgung ist ein magnetischer Festplattenspeicher erst einsatzbereit, nachdem seine rotierenden Magnetplatten auf die Betriebsdrehzahl gebracht worden sind. Diese Wartezeit entfällt bei einem nichtflüchtigen Speicher in Flash-Technologie. Bei dem Betriebssystem VISTA ist es möglich, Dateien des Betriebssystems auf die beiden unterschiedlichen Teile eines Hybrid-Festplattenlaufwerks zu verteilen, wobei insbesondere die bei einem Startvorgang des Betriebssystems zunächst zu ladenden Dateien auf dem schneller einsatzbereiten nichtflüchtigen Flash-Speicher vorgesehen sind. Dieses Verfahren setzt jedoch den Einsatz eines Hybrid-Festplattenlaufwerks voraus. Weiterhin ist das Verfahren nur bei einem entsprechend eingerichteten Betriebssystem möglich.

Es ist daher eine Aufgabe der vorliegenden Erfindung, ein Verfahren zur Beschleunigung des Startvorgangs eines Computers zu schaffen, das unabhängig vom eingesetzten Betriebssystem ist. Es ist eine weitere Aufgabe der Erfindung, ein zur Durchführung des Verfahrens geeignetes Steuergerät für einen Massenspeicher zu schaffen.

Die Erfindung wird durch die Merkmale der unabhängigen Patentansprüche gelöst. Weiterbildungen und vorteilhafte Ausgestaltungen der Erfindung sind Gegenstand der jeweiligen abhängigen Ansprüche.

Gemäß einem ersten Aspekt wird die Erfindung gelöst durch ein Verfahren zum Bereitstellen von Daten für einen Startvorgang eines Computers durch ein Steuergerät für einen Massenspeicher, das die folgenden Schritte aufweist. Zunächst werden Daten, die bei einem ersten Startvorgang (Booten) des Computers von dem Massenspeicher gelesen werden durch das Steuergerät identifiziert. Bei einem nachfolgenden Abschaltvorgang des Computers, auch Herunterfahren (Shut down) genannt, wird mindestens ein Teil der identifizierten Daten durch das Steuergerät von dem Massenspeicher in einen nichtflüchtigen Zwischenspeicher des Steuergeräts kopiert. Bei einem anschließenden weiteren Startvorgang des Computers wird mindestens ein Teil der bei diesem Startvorgang des Computers gelesenen Daten aus dem nichtflüchtigen Zwischenspeicher dem Computer bereitgestellt.

Dadurch, dass zumindest ein Teil der bei dem weiteren Startvorgang des Computers gelesenen Daten aus dem gegenüber dem Massenspeicher nach einem Start schneller einsatzbereiten nichtflüchtigen Zwischenspeicher gelesen werden, resultiert ein Zeitvorteil bei jedem weiteren Startvorgang. Dieser Zeitvorteil ergibt sich nicht nur für Dateien eines beim Start zu ladenden Betriebssystems, sondern auch für Ergänzungen des BIOS oder im Rahmen des BIOS von dem Massenspeicher zu ladenden Treiberbausteinen. Das Identifizieren der beim Startvorgang des Computers vom Computer eingelesenen Daten sowie das Kopieren dieser Daten in den nichtflüchtigen Zwischenspeicher wird vom Steuergerät des Massenspeichers vorgenommen. Das Verfahren kann somit vollkommen unabhängig von einer Mitwirkung des Betriebssystems oder des BIOS ausgeführt werden. Es ist für das Betriebssystem transparent und kann dementsprechend bei beliebigen Betriebssystemen eingesetzt werden.

Gemäß vorteilhafter Ausgestaltungen des Verfahrens werden die beim Startvorgang des Computers gelesenen Daten entweder anhand von Dateinamen und/oder Pfaden oder anhand der Bezeichnungen oder Adressen der Speichereinheiten, in denen die Daten auf dem Massenspeicher abgelegt sind, identifiziert. Beide Alternativen sind zur eindeutigen Identifizierung der Daten geeignet und stellen sicher, dass die beim Startvorgang benötigten Daten in den nichtflüchtigen Zwischenspeicher kopiert und entsprechend von diesem bereitgestellt werden. Besonders bevorzugt sind diese Speichereinheiten im Fall der zuletzt genannten Alternative Sektoren oder Cluster des Massenspeichers.

In einer weiteren vorteilhaften Ausgestaltung des Verfahrens wird nach dem Schritt des Identifizierens der Daten eine Liste der identifizierten Daten erstellt und anhand dieser Liste die Daten von dem Massenspeicher in den nichtflüchtigen Zwischenspeicher kopiert. Bevorzugt wird diese Liste bei dem weiteren Startvorgang des Betriebssystems aktualisiert. Auf diese Weise ist eine Anpassung an geänderte Abläufe des Startvorgangs, zum Beispiel nach einer Installation neuer Geräte oder von Ergänzungen des Betriebssystems, jederzeit sichergestellt.

Gemäß einem zweiten Aspekt der vorliegenden Erfindung wird die Aufgabe gelöst durch ein Steuergerät für mindestens einen Massenspeicher, wobei das Steuergerät einen nichtflüchtigen Zwischenspeicher für Daten des mindestens einen Massenspeichers und eine Steuereinheit für den nichtflüchtigen Zwischenspeicher aufweist. Die Steuereinheit ist dabei zur Durchführung eines der zuvor genannten Verfahren geeignet. Bevorzugt ist das Steuergerät zur Steuerung von Massenspeichern in einer RAID (Redundant Array of Independent Devices)-Anordnung geeignet. Die Vorteile des zweiten Aspekts entsprechen denen des ersten Aspekts.

Im Folgenden wird die Erfindung anhand von Ausführungsbeispielen mit Hilfe von zwei Figuren näher erläutert.

Es zeigen:
- Figur 1: eine schematische Zeichnung eines Computers mit einem Steuergerät mit nichtflüchtigem Zwischenspeicher und einem Massenspeicher und
- Figur 2: ein Flussdiagramm eines Verfahrens zum Starten eines Computers.

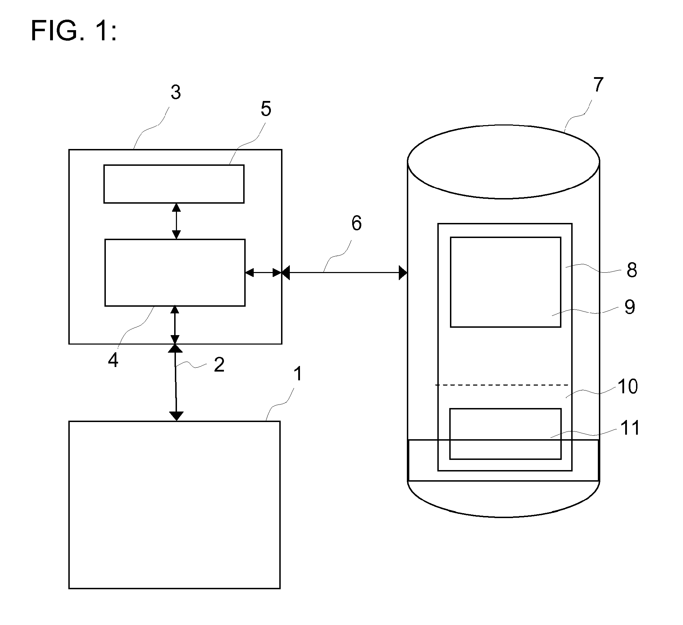

Figur 1 zeigt einen Computer umfassend eine Hauptplatine 1 die über eine Datenverbindung 2 mit einem Steuergerät 3 verbunden ist. Das Steuergerät 3 weist eine Steuereinheit 4 und damit verbunden einen nichtflüchtigen Zwischenspeicher 5 auf. Über eine weitere Datenverbindung 6 ist das Steuergerät 3 mit einem Massenspeicher 7 verbunden. Bei dem Massenspeicher 7 ist ein Datenbereich 8 mit Daten 9 vorgesehen, sowie ein Metadatenbereich 10 mit einer Liste 11.

In der Figur 1 sind nur die für den Anmeldungsgegenstand relevanten Komponenten des Computers gezeigt. Auf weitere Komponenten wie beispielsweise Stromversorgungseinheiten für die Hauptplatine 1, das Steuergerät 3 und den Massenspeicher 7 wurde wegen der besseren Übersichtlichkeit verzichtet.

Das Steuergerät 3 und der Massenspeicher 7 können dabei zusammen mit der Hauptplatine 1 in einem Gehäuse angeordnet sein. In einem solchen Fall ist das Steuergerät 3 häufig als Steckkarte zum Einstecken in die Hauptplatine 1 ausgeführt und die Datenverbindung 2 zwischen der Hauptplatine 1 und dem Steuergerät 3 entspricht der PCI (Peripheral Component Interface) oder der PCI-Express Spezifikation. Ebenso ist es möglich, das Steuergerät 3 und den Massenspeicher 7 nicht mit der Hauptplatine 1 in einem Computergehäuse zu integrieren, sondern als externe Einheit in einem separaten Gehäuse auszuführen. In einem solchen Fall bietet sich als Datenverbindung 2 zwischen der Hauptplatine 1 und dem Steuergerät 3 eine Ethernet- oder Fiber Channel-Verbindung an. Die Einheit aus Steuergerät 3 und einem oder mehrerer Massenspeicher 7 wird in einem solchen Fall auch als NAT (Network Attached Storage) bezeichnet.

Im gezeigten Ausführungsbeispiel ist der Massenspeicher 7 ein magnetisches Festplattenlaufwerk, dessen Speicherbereich in den Datenbereich 8 und den Metadatenbereich 10 aufgeteilt ist. Als weitere Datenverbindung 6 zwischen dem Steuergerät 3 und dem Massenspeicher 7 kommen alle bekannten Verbindungen wie zum Beispiel IDE-ATA (Integrated Disc Electronics - Advanced Technology Attachment), SATA- (Serial Advanced Technology Attachment) oder SAS- (Serial Attached Small Computer System Interface) oder FC (Fibre Channel) in Frage. Auch ist es möglich, dass bei dem Massenspeicher 7 eine Einheit vorgesehen ist, die der Umsetzung der Art der Verbindung dient, so dass als weitere Datenverbindung 6 zum Beispiel auch Ethernet oder iSCSI (internet Small Computer System Interface) eingesetzt werden können, wobei der Massenspeicher 7 selbst auf eine der genannten Arten (IDE-ATA, SATA, SAS usw.) angebunden ist. Eine Anpassung des Steuergeräts 3 an zukünftige Standards für die Ansteuerung von Massenspeichern ist ebenfalls denkbar. Wie der Massenspeicher 7 im Detail ausgeführt ist, ist für das erfindungsgemäße Verfahren nicht erheblich. Von Bedeutung ist lediglich, dass der im Steuergerät 3 vorgesehene nichtflüchtige Zwischenspeicher 5 nach einem Anschalten des Computers schneller einsatzbereit ist als der Massenspeicher 7. Davon kann jedoch für Massenspeicher 7 mit beweglichen Komponenten, also insbesondere für magnetische Festplattenlaufwerke, ausgegangen werden.

In dem Ausführungsbeispiel der Figur 1 ist das Steuergerät 3 nur mit einem Massenspeicher 7 verbunden. Es kann jedoch ebenso für den Anschluss mehrerer Massenspeicher 7 ausgelegt sein, gegebenenfalls in Form eines RAID (Redundant Array of Independent Devices)-Steuergeräts. Im zuletzt genannten Fall kann das Steuergerät 3 zudem dazu ausgelegt sein, auf dem Massenspeicher 7 abgelegte Daten gemäß der "Common Rate Disk Data Format Specification" der SNIA (Storage Networking Industry Association) abzulegen. Nach dieser Spezifikation ist bei einem Massenspeicher 7 oder eines Teils (Partition) eines Massenspeichers 7 neben dem Datenbereich 8 noch der Metadatenbereich 10 vorgesehen, der für die Speicherung von solchen Informationen bereitsteht, die das Steuergerät 3 zur Verwaltung des Massenspeichers 7 einsetzt.

Als nichtflüchtigen Zwischenspeicher 5 können entweder batteriegepufferte statische oder dynamische Speicherzellen Verwendung finden oder nichtflüchtige Speicherzellen auf der Basis der Flash-Technologie. Für den nichtflüchtigen Zwischenspeicher 5 ist eine Größe von mindestens etwa 10 MB (Megabyte), besser aber mindestens etwa 100 MB sinnvoll, um genügend Speicherkapazität für Daten des Startvorgangs bieten zu können. Weiterhin sollte der Speicher innerhalb kürzester Zeit nach Bereitstellen der Stromversorgung einsatzbereit sein.

Es möglich, dass der nichtflüchtigen Zwischenspeicher 5 im Steuergerät 3 eigens für das erfindungsgemäße Verfahren vorgesehen ist. Es ist bei Steuergeräten für Massenspeicher in einer RAID-Konfiguration jedoch zudem bekannt, einen schnellen Zwischenspeicher (Cache) vorzusehen, um auf den Massenspeicher zu schreibenden oder von diesem zu lesende Daten zwischen zu puffern. Häufig ist ein solcher Zwischenspeicher als nichtflüchtiger Speicher ausgelegt, um bei Stromausfällen sicherzustellen, dass noch nicht auf die Massenspeicher geschriebene und nur in dem schnellen Zwischenspeicher vorhandene Daten nicht verloren gehen. Diese Aufgabe kann von dem nichtflüchtiger Zwischenspeicher 5 neben seinem Einsatz für das erfindungsgemäße Verfahren geeignet ebenfalls übernommen werden. Wenn der nichtflüchtige Zwischenspeicher 5 in einem solchen Fall entsprechend auch als schneller Zwischenspeicher für Daten (Datencache) eingesetzt wird, ist die Verwendung von Speichern mit schnellen Zugriffszeiten und hohen Datenraten sinnvoll. Es bietet sich dann der insbesondere der Einsatz von batteriegepufferten statischen oder dynamischen Speicherzellen an.

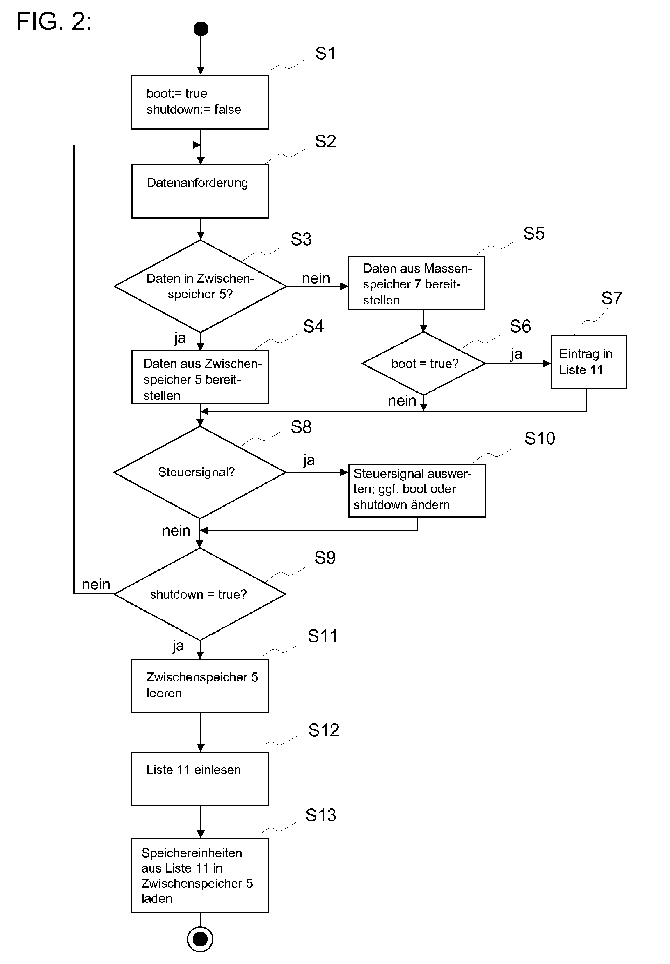

Im Folgenden wird im Zusammenhang mit Figur 2 ein Ausführungsbeispiel des erfindungsgemäßen Verfahrens detaillierter beschrieben, das beispielsweise von einer Anordnung, wie sie in Figur 1 gezeigt ist, ausgeführt werden. In der Figur 2 und der nachfolgenden Beschreibung angegebene Bezugszeichen verweisen entsprechend auf Figur 1.

Das in Figur 2 schematisch in Form eines Flussdiagramms gezeigte Verfahren startet mit dem Bereitstellen der Stromversorgung nach dem Anschalten des die Hauptplatine 1, das Steuergerät 3 und den Massenspeicher 7 umfassenden Computers.

In einem ersten Schritt S1 werden im Steuergerät 3 zwei Marker definiert, die der Steuerung des weiteren Verfahrenablaufs dienen. Der erste Marker "boot" gibt an, ob sich der Computer in der Startphase befindet. Dieser Marker wird in Schritt S1 gesetzt. Der zweite Marker "shutdown" gibt an, ob sich das Betriebssystem des Computers in der Phase des Herunterfahrens zur Vorbereitung eines nachfolgenden Abschaltens des Computers befindet. Dieser Marker wird in Schritt S1 zurückgesetzt.

In einem nächsten Schritt S2 werden von der Hauptplatine 1 des Computers Daten vom Massenspeicher 7 angefordert. Falls der Computer zuvor eingeschaltet wurde, wird es sich bei diesen Daten um Daten handeln, die im Zusammenhang mit dem Startvorgang des Computers benötigt werden.

In einem nächsten Schritt S3 überprüft die Steuereinheit 4 des Steuergeräts 3, ob die angeforderten Daten sich eventuell bereits im nichtflüchtigen Zwischenspeicher 5 des Steuergeräts 3 befinden. Wenn dem so ist, werden in einem Schritt S4 die angeforderten Daten aus dem nichtflüchtigen Zwischenspeicher 5 über die Datenverbindung 2 der Hauptplatine 1 bereitgestellt.

Falls im Schritt S3 festgestellt wurde, dass die angeforderten Daten sich nicht im nichtflüchtigen Zwischenspeicher 5 befinden, verzweigt das Verfahren zu einem Schritt S5, in dem die angeforderten Daten vom Massenspeicher 7 gelesen und über die Datenverbindung 2 der Hauptplatine 1 bereitgestellt werden. Diese Vorgehensweise entspricht der eines "Cache-Miss" bei einem Datencache.

Im anschließenden Schritt S6 wird anhand des Markers "boot" festgestellt, ob der Computer sich in der Hochlaufphase befindet. Wenn das so ist, werden in einem Schritt S7 die Nummern oder Adressen der Speichereinheiten, in denen die angeforderten Daten auf dem Massenspeicher 7 abgelegt sind, in die Liste 11 aufgenommen. Die Speichereinheiten können beispielsweise Sektoren, Cluster oder andere Speicherbereiche des Massenspeichers 7 sein, in den dieser physikalisch oder logisch unterteilt ist.

Dabei ist vorgesehen, dass die Liste 11 im Metadatenbereich 10 des Massenspeichers 7 abgelegt ist. Alternativ kann die Liste 11 auch in dem Datenbereich 8 abgelegt sein, zum Beispiel falls bei dem Massenspeicher 7 kein ausgewiesener Metadatenbereich 10 vorgesehen ist. Auch ist es möglich, die Liste 11 in einem nichtflüchtigen Speicher innerhalb des Steuergeräts 11 selbst abzulegen, beispielsweise auch in dem nichtflüchtigen Zwischenspeicher 5.

Falls die Liste 11 am vorgesehenen Speicherort nicht existiert, zum Beispiel wenn das Verfahren zum ersten Mal durchgeführt wird, wird sie entsprechend im Schritt S7 angelegt. Es ist möglich, dass zu schreibende Daten direkt in die Liste 11 an ihrem Speicherort geschrieben werden. Ebenso ist möglich, dass eine eventuell bereits existierende Liste 11 zu Beginn des Verfahrens im Schritt S1 in einen Arbeitsspeicher des Steuergeräts 3 oder der Steuereinheit 4 gelesen wird und im Schritt S7 die Liste 11 im Arbeitsspeicher ergänzt wird. Nach Abschluss des Startvorgangs kann die Liste 11 dann aus dem Arbeitsspeicher an ihren vorgesehenen Speicherort übertragen werden.

Nachdem einer der Schritte S4, S6 oder S7 ausgeführt wurde setzt das Verfahren mit dem Schritt S8 fort. In diesem Schritt wird abgefragt, ob von der Hauptplatine 1 Steuerinformationen an das Steuergerät 3 übermittelt werden. Solche Steuerinformationen können beispielsweise von einem (Software-)Treiberbaustein für das Steuergerät 3 ausgegeben werden. Zur Durchführung des gezeigten Verfahrens ist insbesondere vorgesehen, dass ein vom Betriebssystem geladener Treiberbaustein für das Steuergerät 3 so eingerichtet ist, dass er das Ende der Startsequenz und den Beginn der Phase des Herunterfahrens des Betriebssystems dem Steuergerät 3 signalisiert. Diese Informationen stehen üblicherweise innerhalb eines jeden Betriebssystems bereit und können entsprechend von dem betriebssystemspezifischen Treiberbaustein ausgelesen und weitergeleitet werden.

Im Flussdiagramm der Figur 2 ist die Entgegennahme von Steuerinformationen (Schritt S8) der Datenbereitstellung (Schritte S4 und S5) nachgeschaltet. Ebenso ist es möglich, die Übergabe der Steuerinformationen (quasi-) parallel zur Datenbereitstellung auszuführen. Die Entgegennahme der Steuerinformationen kann dann beispielsweise über einen Interruptmechanismus oder einen ähnlichen Signalisierungsmechanismus zwischen der Hauptplatine 1 und dem Steuergerät 3 gesteuert werden.

Wenn in dem Schritt S8 keine Steuerinformationen empfangen werden, setzt das Verfahren in einem Schritt S9 fort, in dem der Marker "shut down" ausgewertet wird. Falls dieser Marker nicht gesetzt ist, verzweigt das Verfahren zurück zu dem Schritt S2, so dass das Steuergerät 3 bereit ist, weitere Daten auf Anforderung bereitzustellen.

Wenn im Schritt S8 Steuerinformationen empfangen wurden, werden diese in einem Schritt S10 ausgewertet. Falls die Steuerinformationen angeben, dass der Startvorgang beendet ist, wird der Marker "boot" zurückgesetzt. Falls die Liste 11 im Arbeitsspeicher des Steuergeräts 3 ergänzt wurde, kann sie jetzt an ihren vorgesehenen Speicherort, zum Beispiel den Metadatenbereich 10 des Massenspeichers 7, geschrieben werden. Weiterhin kann vorgesehen sein, den nichtflüchtigen Zwischenspeicher 5 zu leeren, insbesondere wenn der nichtflüchtige Zwischenspeicher 5 zusätzlich als Datencache eingesetzt wird. Zu diesem Zeitpunkt im nichtflüchtigen Zwischenspeicher 5 vorhandene Daten sind solche des Bootvorgangs, die im Folgenden mit großer Wahrscheinlichkeit nicht benötigt werden. Ein Leeren des nichtflüchtigen Zwischenspeichers 5 ist jedoch nicht unbedingt erforderlich, insbesondere wenn übliche und bekannte und daher hier nicht näher dargestellte Mechanismen zum dynamischen Entfernen von nicht benötigten Daten aus einem Datencache eingesetzt werden.

Falls die in Schritt S10 ausgewerteten Steuerinformationen den Beginn der Phase des Herunterfahrens signalisieren, wird in dem Schritt S10 der Marker "shut down" gesetzt.

Falls im Schritt S10 der Marker "shut down" gesetzt wurde, verzweigt das Verfahren im anschließend ausgeführten Schritt S9 zu einem Schritt S11. Wenn der nichtflüchtige Zwischenspeicher 5 zusätzlich als Datencache eingesetzt wird, werden in diesem Schritt S11 alle im nichtflüchtigen Zwischenspeicher 5 vorhandene und bislang noch nicht auf den Massenspeicher 7 geschriebenen Daten auf den Massenspeicher 7 geschrieben (so genannter Cache-Flush). Falls der nichtflüchtige Zwischenspeicher 7 ausschließlich zur Speicherung von Daten des Bootvorgangs dient, kann Schritt S11 entfallen.

Im anschließenden Schritt S12 wird vom Steuergerät 3 die Liste 11 aus dem Massenspeicher 7 eingelesen. Im folgenden Schritt S13 werden die in der Liste 11 gelisteten Speichereinheiten, zum Beispiel Sektoren oder Cluster aus dem Massenspeicher 7 in den nichtflüchtigen Zwischenspeicher 5 übertragen. Diese Speichereinheiten enthalten Daten, die beim Startvorgang des Computers benötigt werden. Falls der nichtflüchtigen Zwischenspeicher 5 genügend Speicherplatz aufweist, werden die Daten aller in der Liste 11 gelisteten Speichereinheiten übertragen. Falls der nichtflüchtigen Zwischenspeicher 5 entweder keine ausreichende Kapazität aufweist oder ein Teil seiner Kapazität noch mit Daten belegt ist, die im Schritt S11 nicht auf den Massenspeicher 7 geschrieben werden konnten, wird die Liste 11 so weit abgearbeitet wie möglich. Es ist daher vorteilhaft, in der Liste 11 die Sektoren in der Reihenfolge, in der sie beim Bootvorgang angefordert wurden, zu listen, so dass die beim Bootvorgang zuerst benötigten Daten mit Vorrang in den nichtflüchtigen Zwischenspeicher 5 übernommen werden können. Nach dem Schritt S13 endet das Verfahren. Hier kann vorgesehen sein, den Abschluss des Verfahrens der Hauptplatine 1 zu signalisieren, so dass diese ein Abschalten der Stromversorgung des Computers anweisen kann.

Die Schritte S11 und S13 bewirken, dass bei einem erneuten Startvorgang des Computers und entsprechend einem neuen Durchlauf des in Figur 2 gezeigten Verfahrens die beim Startvorgang in Schritt S2 angeforderten Daten sich vollständig oder zumindest zu einem großen Teil bereits im nichtflüchtigen Zwischenspeicher 5 befinden und in Schritt S4 entsprechend schnell der Hauptplatine 1 des Computers bereitgestellt werden können. Falls, beispielsweise durch Änderungen der Hard- oder Softwarekonfiguration, sich nicht alle Daten des Startvorgangs im nichtflüchtigen Zwischenspeicher 5 befinden, wird dieses in Schritt S3 anhand des "Cache-Miss" bemerkt und die Liste 11 wird automatisch in den Schritten S6 und S7 aktualisiert. Darüber hinaus kann zu einer Aktualisierung vorgesehen sein, dass die Nummern oder Adressen solcher Speichereinheiten, die zwar in der Liste 11 enthalten sind, die aber beim Startvorgang nicht benötigt werden, wieder aus der Liste 11 gestrichen werden. In einer weiteren Ausgestaltung des Verfahrens kann vorgesehen sein, die Nummern oder Adressen von Speichereinheiten erst dann aus der Liste 11 zu streichen, wenn diese in mehreren aufeinander folgenden Startvorgängen nicht benötigt werden.

Neben der im Ausführungsbeispiel angesprochenen Identifizierung der benötigten Daten anhand der Nummern oder Adressen von Speichereinheiten, also beispielsweise Sektoren oder Clustern, kann auch vorgesehen sein, Dateipfade und - namen zur Identifizierung der Daten einzusetzen. Der Einsatz von Nummern oder Adressen von Sektoren oder Clustern erweist sich jedoch dann als besonders vorteilhaft, wenn der nichtflüchtigen Zwischenspeicher 5 auch als schneller Datencache eingesetzt wird, da ein solcher üblicherweise bereits dazu ausgelegt ist, Daten auf Basis von Sektoren oder Clustern zwischenzuspeichern.

### Bezugszeichenliste

- 1: Hauptplatine
- 2: Datenverbindung
- 3: Steuergerät
- 4: Steuereinheit
- 5: nichtflüchtiger Zwischenspeicher
- 6: weitere Datenverbindung
- 7: Massenspeicher
- 8: Datenbereich
- 9: Daten
- 10: Metadatenbereich
- 11: Liste

## Patentansprüche

1. Verfahren zum Bereitstellen von Daten für einen Startvorgang eines Computers durch ein Steuergerät (3) für einen Massenspeicher (7), auf dem die Daten für den Startvorgang des Computers abgelegt sind, mit den Schritten:
- Identifizieren von Daten, die bei einem ersten Startvorgang des Computer aus dem Massenspeicher (7) gelesen werden durch das Steuergerät (3);
- Kopieren mindestens eines Teils der identifizierten Daten von dem Massenspeicher (7) in einen nichtflüchtigen Zwischenspeicher (5) des Steuergerätes (3) durch das Steuergerät (3) bei einem Abschaltvorgang des Computers;
- Bereitstellen mindestens eines Teils der bei einem weiteren Startvorgang des Computers gelesenen Daten aus dem nichtflüchtigen Zwischenspeicher (5).

2. Verfahren nach Anspruch 1, bei dem der Startvorgang des Computers das komplette oder teilweise Laden eines BIOS und/oder eines Betriebssystems umfasst.

3. Verfahren nach einem der Ansprüche 1 oder 2, bei dem die beim Startvorgang des Computers gelesen Daten anhand von Dateinamen und/oder Pfaden identifiziert werden.

4. Verfahren nach einem der Ansprüche 1 oder 2, bei dem die beim Startvorgang des Computers gelesen Daten anhand der Bezeichnungen der Speichereinheiten, in denen die Daten auf dem Massenspeicher (7) abgelegt sind, identifiziert werden.

5. Verfahren nach Anspruch 4, bei dem der Massenspeicher (7) ein magnetisches Festplattenlaufwerk ist und bei dem die Speichereinheiten Sektoren oder Cluster sind, in die das magnetische Festplattenlaufwerk physikalisch oder logisch unterteilt ist.

6. Verfahren nach einem der Ansprüche 1 bis 5, bei dem nach dem Schritt des Identifizierens der Daten eine Liste der identifizierten Daten erstellt wird und bei dem die Daten anhand der Liste von dem Massenspeicher in den nichtflüchtigen Zwischenspeicher kopiert werden.

7. Verfahren nach Anspruch 6, bei dem bei dem weiteren Startvorgang des Betriebssystems die Liste aktualisiert wird.

8. Steuergerät für mindestens einen Massenspeicher (7) mit einem nichtflüchtigen Zwischenspeicher (5) für Daten des mindestens einen Massenspeichers (7), wobei das Steuergerät eine Steuereinheit (4) für den nichtflüchtigen Zwischenspeicher (5) aufweist, die zur Durchführung eines Verfahrens gemäß einem der Ansprüche 1 bis 7 geeignet ist.

9. Steuergerät nach Anspruch 8, das zur Steuerung von Massenspeichern (7) in einer RAID-Anordnung geeignet ist.

10. Steuergerät nach einem der Ansprüche 8 oder 9, bei dem vorgesehen ist, Informationen über beim Startvorgang eines Computers gelesene Daten auf dem mindestens einen Massenspeicher (7) abzulegen.

11. Steuergerät nach einem der Ansprüche 8 oder 9, bei dem vorgesehen ist, Informationen über beim Startvorgang eines Computers gelesene Daten in dem nichtflüchtigen Zwischenspeicher (5) abzulegen.
